# DEMANDE DE BREVET EUROPEEN

(11) **EP 1 389 815 A1**
(43) Date de publication de la demande: **18.02.2004**
(21) Numéro de dépôt: 03102513.3
(22) Date de dépôt: 12.08.2003
(51) Int. Cl.: H02G 3/04

(54) **Dispositif de support susceptible de protéger au moins un équipement de forme linéaire contre des sollicitations aerothermiques**

(30) Priorité: 14.08.2002 FR 0210331
(71) Demandeur: Cryospace l'air liquide aerospatiale, 78133 Les Mureaux Cédex (FR)
(72) Inventeur: CARGNELLO, Rémo, 78130, LES MUREAUX (FR); BORROMEE, Alain, 78150, LE CHESNAY (FR); MARION, Yael, 78210, SAINT CYR L'ECOLE (FR); JEANSON, Christophe, 78540, VERNOUILLET (FR)
(74) Mandataire: Poulin, Gérard

(57) **Abrégé**

L'invention concerne un dispositif (2) de support et de protection d'équipements (4) de forme linéaire, le dispositif étant destiné à être fixé sur une structure porteuse (1) et susceptible de protéger les équipements (4) contre des sollicitations aérothermiques, le dispositif comprenant des moyens de support (8) aptes à être fixés sur la structure porteuse et à recevoir les équipements (4), ainsi que des moyens de protection (16) recouvrant les moyens de support (8) et comportant une couche de protection thermique et au moins un renfort rigide. Selon l'invention, les moyens de protection (16) sont montés sur les moyens de support (8) par l'intermédiaire de moyens de fixation auto-agrippants.

Application particulière au domaine des réservoirs cryogéniques pour lanceur ou fusée.

## Description

### DOMAINE TECHNIQUE

La présente invention se rapporte à un dispositif de support et de protection d'équipements de forme sensiblement linéaire, le dispositif étant apte à être fixé sur une structure porteuse et à protéger les équipements contre des sollicitations aérothermiques.

Plus spécifiquement, l'invention concerne un dispositif comportant des moyens de support d'équipements fixés sur une structure porteuse, ainsi que des moyens de protection recouvrant les moyens de support et protégeant les équipements contre les flux aérothermiques environnants.

L'invention trouve une application toute particulière dans les domaines aéronautique et spatial, en tant que dispositif de support et de protection fixé extérieurement sur un réservoir cryogénique d'une fusée ou d'un lanceur. Ce type de dispositif, également appelé « gouttière et capot de gouttière électrique », permet de recevoir des équipements du type câble destiné à cheminer le long de la paroi extérieure du réservoir cryogénique, ce dernier étant généralement enrobé d'une protection thermique.

### ETAT DE LA TECHNIQUE ANTERIEURE

Dans ce domaine technique, plusieurs réalisations ont déjà été proposées dans l'art antérieur.

On connaît en effet un dispositif de support classique de câbles électriques ou autres, monté rigidement sur la paroi extérieure d'un réservoir cryogénique d'un lanceur, ce dispositif classique comprenant une rampe du type « gouttière électrique » apte à recevoir fixement une pluralité de câbles.

Afin de protéger les éléments du type câble électrique contre des sollicitations aérothermiques notamment rencontrées en situation de vol, le dispositif comporte également un capot protecteur, recouvrant l'ensemble formé par la rampe munie des ses éléments de forme sensiblement linéaire.

Les capots protecteurs sont généralement réalisés par emboutissage de plaques d'aluminium, celles-ci étant ensuite recouvertes d'une couche de protection thermique.

Par ailleurs, ces capots sont habituellement fixés directement sur la structure du réservoir cryogénique, cette caractéristique spécifique d'assemblage engendrant un certain nombre d'inconvénients majeurs.

En effet, la structure du réservoir cryogénique disposant d'une épaisseur moyenne relativement faible, parfois de l'ordre de quelques millimètres seulement, il est par conséquent nécessaire de réaliser des bossages sur la surface extérieure du réservoir, afin d'être en mesure d'effectuer des trous filetés autorisant une fixation par vissage du capot protecteur sur ce réservoir.

Cette nécessité rencontrée provoque directement des difficultés de réalisation du réservoir, sa forme extérieure ayant été largement complexifiée en raison de l'adjonction des bossages. Par ailleurs, la présence des bossages engendre également une surélévation de la masse du réservoir cryogénique, l'augmentation observée ayant été évaluée à plusieurs dizaines de kilogrammes, et allant inévitablement à l'encontre d'un soucis majeur et constant de réduction de la masse totale du lanceur ou de la fusée.

D'autre part, la structure d'un réservoir cryogénique est généralement munie d'une protection thermique sur sa surface extérieure, la protection étant du type mousse à cellules et s'étendant sur une épaisseur d'environ 20 mm.

Par conséquent, il est donc préférable d'intercaler des entretoises entre la surface extérieure de la structure du réservoir et le capot protecteur, ces entretoises disposant d'une longueur au moins égale à l'épaisseur de la protection thermique, afin d'assurer le passage des vis de fixation à travers celle-ci. Bien entendu, ce type d'assemblage est extrêmement néfaste en termes de coût et de temps de montage.

Afin de faire face aux problèmes liés à l'adjonction de bossages sur la structure du réservoir, une autre solution a été proposée dans l'art antérieur. Cette solution consiste à coller des entretoises, également appelées plots, directement sur la surface extérieure de la structure du réservoir, à l'aide d'une colle apte à résister aux basses températures. Notons que des inserts métalliques sont montés sur les entretoises, dans le but de permettre la fixation du ou des capots protecteurs.

Néanmoins, la mise en oeuvre de cette technique alternative est très difficile à maîtriser, en particulier dans le domaine cryogénique, et encore davantage lorsque le réservoir concerné contient de l'hydrogène liquide à une température avoisinant 20°K.

De plus, malgré l'absence de bossages sur la structure porteuse, la technique employée n'est pas totalement satisfaisante, notamment en raison de l'apparition de contraintes mécaniques importantes sur le capot protecteur, essentiellement dues à la dilatation différentielle des entretoises en fibre de verre et de la structure métallique du réservoir.

En outre, lors de la mise en oeuvre d'une telle technique de collage, le cycle de production est largement alourdi par rapport à la technique de vissage classique présentée ci-dessus. En effet, des étapes intermédiaires telles que celles de préparation des surfaces, d'application de la colle et de polymérisation de la colle doivent être ajoutées, naturellement au détriment de la rapidité de la fabrication du réservoir cryogénique.

Enfin, il est précisé que dans les deux solutions proposées de l'art antérieur, la protection thermique nécessite d'être détourée afin d'autoriser la mise en place des entretoises sur la surface extérieure de la structure du réservoir. De cette façon, le nombre d'entretoises à positionner pouvant souvent atteindre deux cents sur un réservoir classique, le temps et la difficulté de préparation de la protection thermique sont largement préjudiciables à la rapidité et au coût du cycle de production d'un tel réservoir.

### EXPOSÉ DE L'INVENTION

L'invention a donc pour but de proposer un dispositif de support et de protection d'au moins un équipement de forme sensiblement linéaire, le dispositif étant destiné à être fixé sur une structure porteuse et susceptible de protéger chaque équipement contre des sollicitations aérothermiques, et remédiant au moins partiellement aux inconvénients mentionnés ci-dessus relatifs aux réalisations de l'art antérieur.

Plus précisément, le but de l'invention est de présenter un dispositif de support et de fixation diminuant considérablement l'ajout de matière nécessaire à sa fixation sur la structure porteuse, et réduisant de manière non négligeable le coût global industriel de la fabrication de la structure porteuse munie de son dispositif de support et de protection associé.

Pour ce faire, l'invention a pour objet un dispositif de support et de protection d'au moins un équipement de forme sensiblement linéaire, le dispositif étant destiné à être fixé sur une structure porteuse et susceptible de protéger chaque équipement contre des sollicitations aérothermiques. Le dispositif comprend des moyens de support aptes d'une part à être fixés sur la structure porteuse, et d'autre part à recevoir chaque équipement. Par ailleurs, le dispositif comporte également des moyens de protection recouvrant les moyens de support de manière à protéger chaque équipement contre les sollicitations aérothermiques, ces moyens de protection comportant une couche de protection thermique et au moins un renfort rigide. Selon l'invention, les moyens de protection sont montés sur les moyens de support par l'intermédiaire de moyens de fixation auto-agrippants.

Avantageusement, le dispositif de support et de protection selon l'invention est conçu de sorte que son installation sur la structure porteuse, telle qu'un réservoir cryogénique, n'implique aucun ajout de matière sur cette structure porteuse, permettant ainsi d'obtenir un ensemble de coût et de masse réduits par rapport à ceux des ensembles proposés dans l'art antérieur.

De plus, la solution technologique employée relative aux moyens de fixation auto-aggripants autorise un montage extrêmement simple et rapide des moyens de protection sur les moyens de support. La solution utilisée réduit alors considérablement la durée du cycle de production de la structure porteuse et de son dispositif de support et de protection associé, et ne nécessite par conséquent aucune visserie ni aucun outillage spécifique supplémentaire.

En outre, le fait de supprimer les entretoises et les bossages présents dans l'art antérieur permet de s'exonérer du détourage de la protection thermique, généralement prévue autour de la structure porteuse, par exemple lorsque celle-ci est constituée par un réservoir cryogénique. A cet égard, on peut également indiquer que l'absence de modification de la protection thermique entraîne la suppression des ponts thermiques entre la structure porteuse et les moyens de protection des équipements du type câble, ainsi que les risques de cryopompage de l'air à basse température.

De façon préférée, les moyens de protection comprennent un empilement d'éléments, parmi lesquels on trouve la couche de protection thermique, une couche de tissu dont la surface extérieure est enduite de la couche de protection thermique, une pluralité de renforts rigides disposés les uns à côté des autres et solidaires de la surface intérieure de la couche de tissu, et enfin une première partie des moyens de fixation auto-agrippants solidaire des renforts rigides.

Bien entendu, ces éléments sont choisis de manière à ce que l'empilement obtenu supporte des températures élevées et présente de bonnes caractéristiques mécaniques telles que la résistance à l'arrachement, afin de faire face aux forts flux aérothermiques environnants.

Préférentiellement, les moyens de support comportent une pluralité d'éléments de support des moyens de protection, ces éléments de support comprenant des surfaces d'extrémité sur lesquelles est fixée une seconde partie des moyens de fixation auto-aggripants, coopérant avec la première partie des moyens de fixation auto-aggripants.

On peut alors prévoir que l'empilement des éléments formant les moyens de protection comporte au moins une pliure pratiquée entre deux renforts rigides, et de préférence deux pliures seulement, de sorte que l'empilement comporte une portion centrale reliée à deux portions latérales par l'intermédiaire de ces deux pliures, les deux portions latérales étant situées de part et d'autre de la portion centrale.

Cet agencement particulier permet aux moyens de protection de prendre, en section, la forme de la petite base et des deux côtés latéraux d'un trapèze, cette forme étant tout à fait appropriée pour assurer une bonne assise des moyens de protection sur les moyens de support, et apte à supporter des flux aérothermiques importants.

Selon un mode de réalisation préféré de la présente invention, chaque pliure réalisée sur l'empilement des éléments formant les moyens de protection est renforcée par une tresse métallique, dans le but d'éviter une déchirure de la couche de tissu au niveau de ces pliures. Chaque tresse métallique est donc avantageusement positionnée entre deux renforts rigides sur la couche en tissu, et suffisamment souple pour se déformer avec cette couche de tissu lors de la réalisation des pliures entre les différentes portions des moyens de protection. Par ailleurs, les tresses métalliques peuvent également remplir la fonction de masse électrique autorisant l'écoulement des charges électrostatiques accumulées par les moyens de protection. Ainsi, les équipements du type câble peuvent être protégés contre d'éventuelles décharges électriques susceptibles de provoquer des arcs électriques à haute tension.

De manière préférée, la première partie des moyens de fixation auto-aggripants comprend des bandes aggripantes placées sur la portion centrale et les portions latérales de l'empilement des éléments formant les moyens de protection, au moins à proximité des deux pliures. De plus, on peut prévoir que la première partie des moyens de fixation auto-aggripants comprend également au moins une autre bande aggripante placée sur la portion centrale de l'empilement des éléments formant les moyens de protection, chaque bande aggripante étant en regard d'une surface d'extrémité d'un élément de support des moyens de protection, lorsque ces derniers sont montés sur les moyens de support du dispositif.

Pour assurer un maintien encore plus performant des moyens de protection sur les moyens de support, il est possible d'adjoindre deux fermetures à glissière disposées sensiblement parallèlement aux deux pliures, les deux fermetures se situant respectivement entre une extrémité libre de l'une et de l'autre des deux portions latérales de l'empilement des éléments formant les moyens de protection, et les moyens de support du dispositif. De façon avantageuse, en raison de la localisation spécifique des fermetures à glissière sur les bords des portions latérales de l'empilement, toute possibilité d'amorce d'ouverture des moyens de fixation auto-aggripants est ainsi supprimée.

Il sera alors possible de prévoir des fermetures à glissière étanche à l'eau, afin qu'elles remplissent le rôle d'un joint d'étanchéité classique entre les moyens de protection et les moyens de support. En revanche, les fermetures à glissière seront préférentiellement perméables au gaz, dans le but d'assurer l'équilibre entre la pression à l'intérieur du dispositif et la pression atmosphérique.

Enfin, dans une application toute particulière de l'invention, la structure porteuse est une structure de réservoir cryogénique revêtue extérieurement d'une protection thermique et équipant un lanceur ou une fusée, et les équipements de forme sensiblement linéaire à protéger sont des câbles.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe transversale d'une structure porteuse équipée d'un dispositif de support et de protection d'au moins un équipement de forme sensiblement linéaire, selon un mode de réalisation préféré de la présente invention ;
- la figure 2 représente une vue partielle en coupe prise le long de la ligne II-II de la figure 1 ; et
- la figure 3 représente une vue de dessous des moyens de protection du dispositif représenté sur la figure 1, lorsque ces moyens de protection n'ont pas encore été pliés.

### EXPOSÉ DÉTAILLÉ D'UN MODE DE RÉALISATION PRÉFÉRÉ

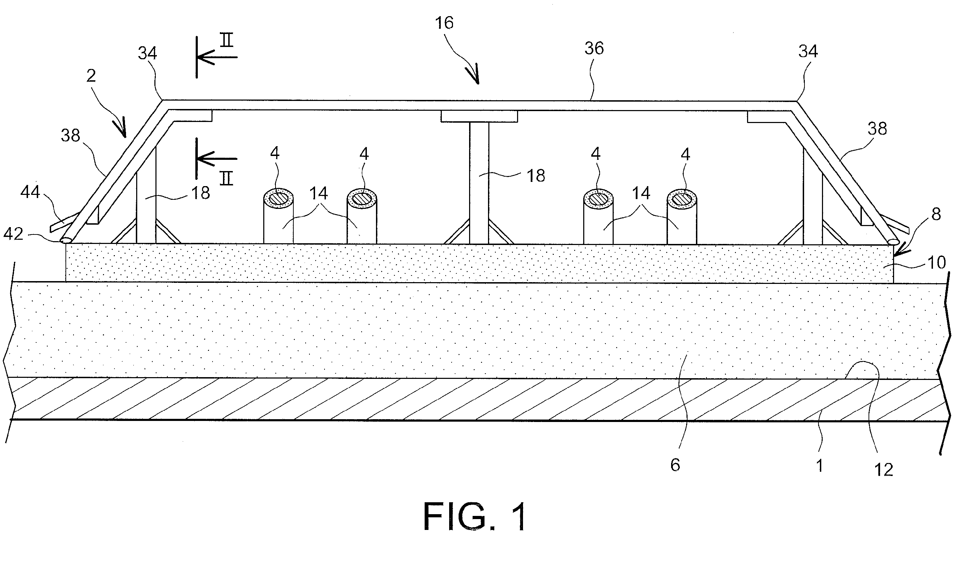

En référence à la figure 1, on peut voir une structure porteuse 1, sur laquelle est fixé un dispositif de support et de protection 2 d'au moins un équipement 4 de forme sensiblement linéaire, selon un mode de réalisation préféré de la présente invention.

Dans la description réalisée ci-dessous, la structure porteuse 1 peut être considérée comme une structure de réservoir cryogénique équipant un engin ou un véhicule dans les domaines aéronautique et spatial, cette structure 1 étant alors recouverte extérieurement d'une protection thermique 6 du type mousse à cellules fermées d'environ 20 mm d'épaisseur. Bien entendu, l'application du dispositif 2 n'est en aucun cas limitée à son adjonction sur un réservoir cryogénique, et pourrait à titre d'exemple être monté sur une structure quelconque d'une fusée ou d'un lanceur, susceptible d'être exposée à des sollicitations aérothermiques.

Par ailleurs, les équipements 4 de forme sensiblement linéaire que doivent supporter et protéger le dispositif 2 peuvent s'apparenter à des câbles ou des tubes quelconques devant cheminer extérieurement le long de la structure 1 du réservoir cryogénique. Toujours à titre d'exemples non limitatifs, il peut s'agir de câbles électriques, de gaines pyrotechniques ou encore de ventilation.

Comme cela est visible sur la figure 1, le dispositif 2 comprend des moyens de support 8, aptes d'une part à être positionnés sur la protection thermique 6 de façon être fixés sur la structure porteuse 1, et d'autre part à recevoir chacun des équipements 4 du type câble. Notons que les moyens de fixation des moyens de support 8 sur la structure porteuse 1 ne sont pas représentés sur les figures. Néanmoins, on peut les considérer comme des moyens classiques de fixation, tels que des rivets.

Plus précisément, les moyens de support 8 comprennent un élément principal 10 épousant la protection thermique 6 de la structure 1, cet élément principal 10 disposant par conséquent d'une surface sensiblement complémentaire à la surface extérieure 12 de la structure 1 du réservoir cryogénique.

Par ailleurs, des éléments de support des équipements 14 sont solidaires de l'élément principal 10, et s'étendent depuis la surface opposée à la surface de l'élément 10 en contact avec la protection thermique 6. Notons que les éléments de support des équipements 14 peuvent être disposés de façon quelconque sur l'élément principal 10, de manière à pouvoir recevoir et faire cheminer l'ensemble des câbles 4 à l'intérieur du dispositif 2.

Le dispositif de support et de protection 2 comporte en outre des moyens de protection 16 recouvrant les moyens de support 8 afin de protéger les équipements 4 contre les sollicitations aérothermiques, ces moyens de protection 16 étant montés sur les moyens de support 8 par l'intermédiaire de moyens de fixation auto-aggripants (non représentés sur la figure 1).

Afin de faire coopérer les moyens de support 8 et les moyens de protection 16 du dispositif 2, les moyens de support 8 comportent des éléments de support des moyens de protection 18, ces éléments 18 étant solidaires de l'élément principal 10 et s'étendant depuis la surface opposée à la surface en contact avec la protection thermique 6. Au même titre que les éléments de support des équipements 14, les éléments de support des moyens de protection 18 peuvent être rapportés sur l'élément principal 10 des moyens de support 8, ou réalisés d'une seule pièce avec celui-ci.

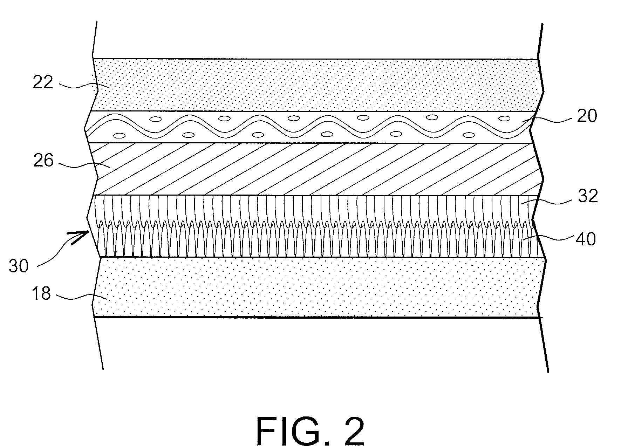

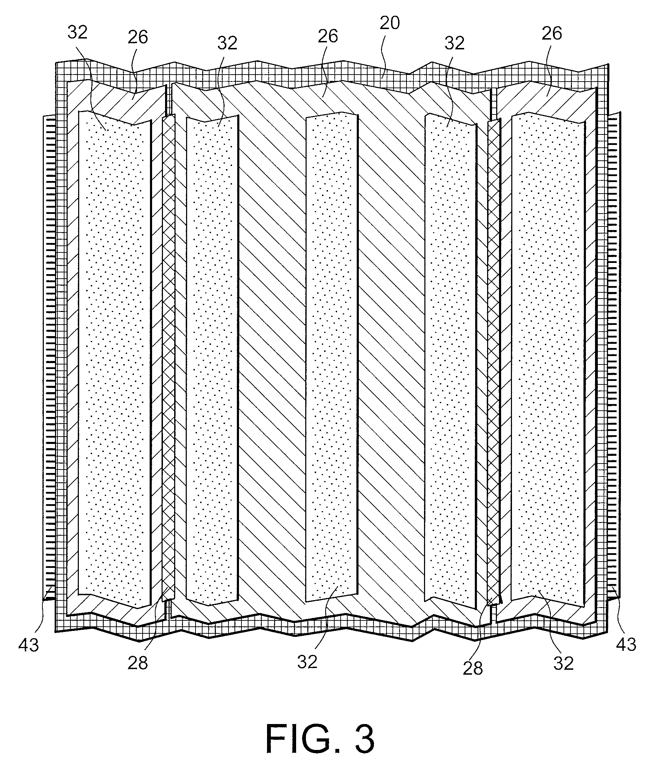

En référence aux figures 2 et 3, les moyens de protection 16 sont constitués d'un empilement d'éléments comportant tout d'abord une couche de tissu 20, réalisée préférentiellement avec un tissu aramide ignifuge de type balistique. Le tissu peut être choisi de manière à ce que sa masse surfacique soit légèrement inférieure à 250 g/m², et de sorte qu'il présente une contrainte à la rupture en traction d'environ 700 daN/50 mm, dans le sens de chaîne et de trame (norme ISO 1421/1 et DIN 53 354).

Sur une surface extérieure de la couche de tissu 20, il est prévu une couche de protection thermique 22, pouvant par exemple être réalisée dans un matériau élastomère chargé en silice, présentant des propriétés de souplesse et de résistance aux fortes températures. Notons que le choix du matériau de la couche de protection thermique 22 est essentiellement déterminé en fonction des conditions d'utilisation. A titre d'exemple, lorsque le dispositif 2 est destiné à être utilisé en vol sur un lanceur ou une fusée, le matériau constituant la couche de protection thermique 22 sera principalement choisi en fonction de sa capacité à supporter des fortes températures.

Ainsi, la couche de protection thermique 22 en élastomère chargé en silice peut avoir une épaisseur d'environ 2 mm, de manière à limiter au maximum le gradient thermique jusqu'à l'interface avec la couche de tissu 20, et de façon à conserver son intégrité pour des températures pouvant atteindre 200°C.

Les moyens de protection 16 disposent également d'une pluralité de renforts rigides 26, disposés parallèlement les uns à côté des autres et solidaires d'une surface intérieure de la couche de tissu 20. Les renforts 26 assurent la rigidité du dispositif 2, et permettent de faire face aux contraintes aérodynamiques appliquées sur ce dispositif. Notons que les renforts 26 sont de préférence du type plaque perforée réalisée en aluminium ou dans l'un de ses alliages.

Dans le mode de réalisation préféré de l'invention représenté sur les figures, les moyens de protection 16 comportent trois renforts rigides 26 espacés de quelques millimètres seulement, de manière à ce que l'espace prévu entre deux renforts 26 juxtaposés permette un pliage de la couche en tissu 20. Bien entendu, on pourrait également prévoir un seul renfort rigide apte à être plié, mais la solution préférée adoptée autorise une plus grande liberté dans le choix de la forme finale à donner aux moyens de protection 16, en raison de la facilité de manipulation et de pliage du tissu séparant les différents renforts rigides 26.

En effet, lors de la réalisation des moyens de protection 16, les renforts rigides 26 sont collés dans un même plan défini par la couche de tissu 20. Notons à cet égard que la forme initiale plane de l'empilement constituant les moyens de protection 16 permet de réaliser la couche de protection thermique 22 par projection, de façon rapide et aisée, en limitant fortement les pertes de produit pulvérisé. De plus, la forme plane des moyens de protection 16 peut être conservée pendant toute la période précédant son montage sur les moyens de support 8, afin de diminuer son encombrement, et par conséquent de faciliter sa manutention, son stockage et son transport.

Par ailleurs, pour renforcer les zones de la couche de tissu 20 qui ne sont pas recouvertes par un des renforts rigides 26, ces derniers sont reliés deux à deux par l'intermédiaire de tresses métalliques 28 s'étendant dans la même direction que les renforts 26. Notons que ces tresses métalliques 28 sont prévues pour faire face à d'éventuelles amorces de rupture de la couche de tissu 20, au niveau des zones non renforcées destinées à subir un pliage dans le but de profiler les moyens de protection 16, et faciliter leur intégration sur les moyens de support 8.

Comme cela a été mentionné ci-dessus, des moyens de fixation auto-aggripants 30 permettent l'assemblage rapide des moyens de protection 16 sur les moyens de support 8. Une première partie de ces moyens auto-aggripants 30 est solidaire des renforts rigides 26, et prend la forme d'une pluralité de bandes aggripantes 32. Lorsque les bandes aggripantes 32 sont solidarisées sur les renforts métalliques 26, l'empilement constituant les moyens de protection 16 est achevé, et peut donc subir une opération de pliage de manière à pouvoir être monté fixement sur les éléments de support des moyens de protection 18.

En référence aux figures 1 et 3, un pliage est effectué au niveau de chacune des deux tresses métalliques 28, de manière à créer deux pliures 34 entre lesquelles se situe une portion centrale 36 de l'empilement formant les moyens de protection 16. Par ailleurs, deux portions latérales 38 s'étendent également respectivement depuis ces deux pliures 34, de sorte que l'empilement prenne, en section, la forme d'une petite base et des deux côtés latéraux d'un trapèze, cette géométrie spécifique étant parfaitement adaptée pour résister aux flux aérothermiques. D'autre part, il est également à noter qu'une fois plié et mis en place sur les moyens de support 8 du dispositif 2, l'empilement formant les moyens de protection 16 et l'élément principal 10 des moyens de support 8 disposent d'une section transversale de forme sensiblement trapézoïdale.

Dans le mode de réalisation préféré décrit et en référence à la figure 3, les bandes 32 de la première partie des moyens auto-aggripants 30 sont placées de manière à être en regard d'une surface d'extrémité d'un élément de support des moyens de protection 18, lorsque ces moyens de protection 16 sont en place sur les moyens de support 8 du dispositif 2, donc après avoir subi les pliages au niveau des tresses métallique 28. A titre d'exemple, on peut prévoir que la première partie des moyens de fixation 30 comprend des bandes aggripantes 32 placées au niveau des portions latérales 38 et de la portion centrale 36, à proximité de chacune des deux pliures 34 s'étendant sensiblement parallèlement aux équipements 4 de forme sensiblement linéaire. Dans ce cas de figure, les bandes aggripantes 32 des portions latérales 38 s'étendent avantageusement sur une grande surface de ces portions 38, pour éviter au maximum les amorces de décrochage des moyens de protection 16.

De cette façon, deux éléments de support des moyens de protection 18 sont donc situés aux extrémités de l'élément principal 10, afin que leurs surfaces d'extrémité respectives, portant des bandes aggripantes 40 d'une seconde partie des moyens de fixation 32, puissent se situer en regard des bandes 32 de la première partie des moyens de fixation 30. Pour assurer une excellente coopération entre ces bandes 32 et 40, les surfaces d'extrémité des éléments de support des moyens de protection 18 sont réalisées de manière à présenter une section transversale en forme de V retourné, l'angle du V étant sensiblement égal à l'angle formé par les pliures 34 des moyens de protection 16. Ainsi, les bandes complémentaires et auto-aggripantes 32,40 constituant au moins partiellement les moyens de fixation 30 peuvent coopérer les unes avec les autres, afin d'engendrer la fixation des moyens de protection 16 sur les moyens de support 8.

Il est également possible de prévoir au moins une autre bande aggripante 32 sur la portion centrale 36 des moyens de protection 16, par exemple au centre de celle-ci, de manière à ce qu'elle soit en regard d'un élément de support des moyens de protection 18. Les éléments de support 18 prennent alors préférentiellement la forme d'un rail dont la surface d'extrémité porte une ou plusieurs bandes 40 appartenant à la seconde partie des moyens de fixation auto-aggripants 30.

Bien entendu, le positionnement et le nombre des bandes auto-aggripantes 32,40 des moyens de fixation auto-aggripants 30 peuvent être modifiés en fonction des flux aérodynamiques à supporter et de la géométrie du dispositif 2 que l'on désire obtenir, sans sortir du cadre de l'invention.

Préférentiellement, les bandes aggripantes 32 de la première partie des moyens de fixation 30 comprennent des boucles en fil aramide, agencées sur un fond en Nomex® . De plus, les bandes aggripantes 40 de la seconde partie des moyens de fixation 30 comportent des crochets en monofilament de 0.1 mm de diamètre en acier inoxydable, ces crochets étant également agencés sur un fond en Nomex® . A titre d'exemple, les bandes aggripantes 40 peuvent comporter 80 crochets/cm², de façon à supporter une température de 235°C et un effort longitudinal de 120 N/cm².

La réalisation des empilements d'éléments formant les moyens de protection 16 du dispositif 2 nécessite la solidarisation de ces éléments les uns avec les autres. A ce titre, on peut noter le besoin de fixation des renforts rigides 26 sur la couche de tissu 20, des bandes aggripantes 32 sur les renforts 26, ou encore les tresses métalliques 28 sur les renforts 26. Avantageusement, cette solidarisation peut s'effectuer par collage, par exemple à l'aide d'un adhésif de la famille des époxydes, tel que la colle Duralco 4460® produite par la société Cotronics® . Ce type d'adhésif haute température sans charge minérale est utilisable jusqu'à des températures pouvant atteindre 270-300°C, donc largement compatible avec les sollicitations thermiques rencontrées en situation de vol d'une fusée ou d'un lanceur.

Outre les moyens de fixation auto-aggripants 30 autorisant la fixation des moyens de protection 16 sur les moyens de support 8, le dispositif 2 comporte également deux fermetures à glissière 42 (représentées sur la figure 1 mais dont une seule partie 43 de chacune d'entre elles est représentée sur la figure 3), disposées sensiblement parallèlement aux pliures 34 et aux renforts rigides 26, respectivement entre une extrémité libre de chacune des portions latérales 38, et une extrémité latérale de l'élément principal 10 des moyens de support 8. De cette façon, les risques d'arrachement des moyens de protection 16 sont encore davantage diminués. Notons que ces fermetures à glissière 42, du type étanche à l'eau et perméable aux gaz, peuvent être protégées des flux aérothermiques à l'aide de bavettes de protection 44, fixées sur les moyens de protection 16 par l'intermédiaire de boutons de pression ou de bandes auto-aggripantes (non représentés).

Naturellement, pour équiper une structure de réservoir cryogénique ou toute autre structure porteuse 1, il est possible de juxtaposer plusieurs empilements formant les moyens de protection 16 le long des moyens de support 8, l'interface entre deux empilements directement consécutifs étant assurée par un recouvrement du type tuile dont le sens est fonction de l'écoulement des flux aérodynamiques.

Bien entendu, diverses modifications peuvent être apportées par l'homme du métier au dispositif de support et de protection 2 d'au moins un équipement 4 de forme sensiblement linéaire qui vient d'être décrit, uniquement à titre d'exemple non limitatif.

## Revendications

1. Dispositif (2) de support et de protection d'au moins un équipement (4) de forme sensiblement linéaire, ledit dispositif (2) étant destiné à être fixé sur une structure porteuse (1) et susceptible de protéger chaque équipement (4) contre des sollicitations aérothermiques, ledit dispositif (2) comprenant des moyens de support (8) aptes d'une part à être fixés sur ladite structure porteuse (1) et d'autre part à recevoir chaque équipement (4), ainsi que des moyens de protection (16) recouvrant les moyens de support (8) de manière à protéger chaque équipement (4) contre les sollicitations aérothermiques, les moyens de protection (16) comportant une couche de protection thermique (22) et au moins un renfort rigide (26), **caractérisé en ce que** lesdits moyens de protection (16) sont montés sur les moyens de support (8) par l'intermédiaire de moyens de fixation auto-agrippants (30).

2. Dispositif (2) selon la revendication 1, dans lequel les moyens de protection (16) comprennent l'empilement des éléments suivants :
- ladite couche de protection thermique (22) ;
- une couche de tissu (20) dont la surface extérieure est enduite de ladite couche de protection thermique (22);
- une pluralité de renforts rigides (26) disposés les uns à côté des autres, et solidaires de la surface intérieure de ladite couche de tissu (20) ;
- une première partie des moyens de fixation auto-agrippants (30) solidaire desdits renforts rigides (26).

3. Dispositif (2) selon la revendication 2, dans lequel les moyens de support (8) comportent une pluralité d'éléments de support des moyens de protection (18), lesdits éléments de support (18) comprenant des surfaces d'extrémité sur lesquelles est fixée une seconde partie des moyens de fixation auto-aggripants (30), ladite seconde partie coopérant avec ladite première partie des moyens de fixation auto-aggripants (30).

4. Dispositif (2) selon la revendication 2 ou la revendication 3, dans lequel l'empilement des éléments formant les moyens de protection (16) comporte au moins une pliure (34) pratiquée entre deux renforts rigides (26).

5. Dispositif (2) selon la revendication 4, dans lequel l'empilement des éléments formant les moyens de protection (16) comporte une portion centrale (36) reliée à deux portions latérales (38) respectivement à l'aide de deux pliures (34), les deux portions latérales (38) étant situées de part et d'autre de ladite portion centrale (36).

6. Dispositif (2) selon la revendication 4 ou la revendication 5, dans lequel chaque pliure (34) réalisée sur l'empilement des éléments formant les moyens de protection (16) est renforcée par une tresse métallique (28).

7. Dispositif (2) selon l'une quelconque des revendications 5 à 6, dans lequel ladite première partie des moyens de fixation auto-aggripants (30) comprend des bandes aggripantes (32) placées sur la portion centrale (36) et les portions latérales (38) de l'empilement des éléments formant les moyens de protection (16), au moins à proximité des deux pliures (34).

8. Dispositif (2) selon la revendication 7, dans lequel ladite première partie des moyens de fixation auto-aggripants (30) comprend au moins une autre bande aggripante (32) placée sur la portion centrale (36) de l'empilement des éléments formant les moyens de protection (16), chaque bande aggripante (32) étant en regard d'une surface d'extrémité d'un élément de support des moyens de protection (18), lorsque ces derniers sont montés sur les moyens de support (8) dudit dispositif (2).

9. Dispositif (2) selon l'une quelconque des revendications 5 à 8, dans lequel lesdits moyens de protection (16) sont également solidarisés aux moyens de support (8) par l'intermédiaire de deux fermetures à glissière (42) disposées sensiblement parallèlement auxdites deux pliures (34), respectivement entre une extrémité libre de l'une et de l'autre des deux portions latérales (38) de l'empilement des éléments formant les moyens de protection (16), et les moyens de support (8) dudit dispositif (2).

10. Dispositif (2) selon la revendication 9, dans lequel chaque fermeture à glissière (42) est étanche à l'eau et perméable au gaz.

11. Dispositif (2) selon l'une quelconque des revendications 2 à 10, dans lequel la couche de tissu (20) est réalisée en tissu aramide ignifuge.

12. Dispositif (2) selon l'une quelconque des revendications précédentes, dans lequel la couche de protection thermique (22) est réalisée dans un matériau élastomère chargé en silice.

13. Dispositif (2) selon l'une quelconque des revendications précédentes, dans lequel les renforts rigides (26) des moyens de protection (16) sont des plaques perforées réalisées en aluminium ou dans l'un de ses alliages.

14. Dispositif (2) selon l'une quelconque des revendications précédentes, dans lequel les moyens de fixation auto-aggripants (30) sont des bandes auto-aggripantes (32,40) aptes à supporter une température de 235°C et un effort longitudinal de 120 N/cm².

15. Dispositif (2) selon l'une quelconque des revendications précédentes, dans lequel la structure porteuse (1) est une structure de réservoir cryogénique revêtue extérieurement d'une protection thermique (6) et équipant un lanceur ou une fusée, et dans lequel les équipements (4) de forme sensiblement linéaire à protéger sont des câbles.
